# FASCICULE DE BREVET EUROPEEN

(11) **EP 3 087 789 B1**
(45) Date de publication et mention de la délivrance du brevet: **01.09.2021**
(21) Numéro de dépôt: 14831019.6
(22) Date de dépôt: 23.12.2014
(51) Int. Cl.: H04W 56/00, H04W 88/16

(54) **SYNCHRONISATION DES COMMUNICATIONS DANS UNE INSTALLATION DE TELERELEVE**
KOMMUNIKATIONSSYNCHRONISIERUNG IN EINER FERNLESEVORRICHTUNG
COMMUNICATION SYNCHRONISATION IN A REMOTE-READING APPARATUS

(30) Priorité: 26.12.2013 FR 1363583
(43) Date de publication de la demande: 02.11.2016
(73) Titulaire: GRDF, 75009 Paris (FR); SUEZ Groupe, 92040 Paris la Défense CEDEX (FR)
(72) Inventeur: LACOSTE, Robert, F-92370 Chaville (FR); MILLE, Michaël, F-28410 Bû (FR); VIALLE, Alexandre, F-75015 Paris (FR)
(74) Mandataire: Fédit-Loriot
(86) Numéro de dépôt international: PCT/FR2014/053541
(87) Numéro de publication internationale: WO 2015/097408

(56) Documents cités:
- EP-A1- 2 587 872
- WO-A1-2004/099723
- US-A- 5 673 252
- US-A1- 2011 140 909
- US-A1- 2013 003 620
- PAOLO FERRARI ET AL: "Time distribution in IPv6 Wireless Sensor Networks", PRECISION CLOCK SYNCHRONIZATION FOR MEASUREMENT CONTROL AND COMMUNICATION (ISPCS), 2011 INTERNATIONAL IEEE SYMPOSIUM ON, IEEE, 12 septembre 2011 (2011-09-12), pages 69-74, XP031974500, DOI: 10.1109/ISPCS.2011.6070149 ISBN: 978-1-61284-893-8
- None

## Description

### Domaine Technique:

La présente invention se rapporte à la gestion des communications dans une installation de télérelève.

### État de la technique antérieur:

Une installation de télérelève comprend classiquement plusieurs dispositifs de comptage, par exemple des compteurs d'eau ou de gaz, ainsi que des systèmes de passerelle communiquant d'une part avec les dispositifs de comptage et d'autre part avec un réseau de télécommunications externe.

Les dispositifs de comptage transmettent vers un ou plusieurs systèmes de passerelle des données, dites données de comptage. Les données de comptage peuvent par exemple comprendre des données de consommation d'eau, et plus généralement des données de consommation de fluide ou d'énergie, ou encore des données issues de mesures effectuées par des capteurs (température, pollution, etc.). Chaque système de passerelle transmet ces données issues de dispositifs de comptage, vers le réseau de télécommunications. Les données ainsi collectées peuvent ensuite être analysées, par exemple afin de facturer les clients et également à des fins de détection de fuites éventuelles ou autres défaillances.

Les dispositifs de comptage comprennent un module radiofréquences, pour communiquer avec le ou les systèmes de passerelle voisin(s). Ce module radiofréquences peut par exemple émettre des ondes de relativement courte portée, par exemple à 169 MHz, ou bien encore à 433 MHz ou 868 MHz.

Un système de passerelle comprend un dispositif concentrateur, ou armoire de collecte, installé par exemple dans un local technique d'immeuble, et un (ou plusieurs) dispositif d'émission/réception radiofréquences, installé par exemple sur le toit de l'immeuble, pour communiquer avec les modules radiofréquences des dispositifs de comptage.

Les équipements de comptage et de passerelle existants intègrent des oscillateurs relativement simples et bon marchés, mais dont la fréquence est susceptible d'évoluer avec le temps. On prévoit donc pour la réception des filtres relativement peu raides et/ou de bande passante relativement étendue. Néanmoins, avec l'augmentation du nombre d'équipements, il existe un risque de saturation de la bande passante et de pertes de données.

Afin de fiabiliser les communications, il a été envisagé de générer des signaux avec des fréquences plus précises en utilisant des équipements comprenant des oscillateurs plus élaborés, mais cette solution risque d'augmenter la complexité et le coût des modules radiofréquences des dispositifs de comptage et des dispositifs d'émission/réception radiofréquences des systèmes de passerelle.

Il a également été envisagé d'exploiter un signal radiofréquences de synchronisation transmis par un équipement supplémentaire, mais cette solution risque de s'avérer là aussi complexe à mettre en œuvre.

L'article de Paolo Ferrari et al., « Time distribution in IPv6 Wireless Sensors Networks », PRECISION CLOCK SYMCHRONIZATION FOR MEASUREMENT CONTROL AND COMMUNICATION (ISPCS), 2011 INTERNATIONAL IEEE SYMPOSIUM ON, IEEE, 12 septembre 2011, pages 69-64 décrit un procédé de synchronisation en temps, au moyens de messages de synchronisation.

Les documents WO 2004/099723, US 2013/003620, EP 2587872 et US 5 673 252 se rapportent également à des procédés de synchronization en temps.

Il existe donc un besoin pour un procédé de gestion des communications dans une installation de télérelève qui permettrait de concilier simplicité et relativement faible utilisation de bande passante.

### Exposé de l'invention:

Il est proposé un procédé de gestion mis en œuvre par un dispositif d'émission/réception radiofréquences d'un système de passerelle d'une installation de télérelève comprenant en outre une pluralité de dispositifs de comptage, chaque dispositif de comptage comprenant un module de comptage et un module radiofréquences pour communiquer avec ledit dispositif d'émission/réception radiofréquences, et ledit système de passerelle comprenant en outre un dispositif concentrateur en communication d'une part avec ce dispositif d'émission/réception radiofréquences et d'autre part avec au moins un réseau de télécommunications externe, le procédé comprenant :
- recevoir du dispositif concentrateur un signal de passerelle descendant, élaboré à partir d'un signal de synchronisation réseau issu d'une horloge du réseau de télécommunications,
- adapter les émissions radiofréquences vers le dispositif de comptage et/ou les réceptions radiofréquences en provenance du dispositif de comptage, à partir de ce signal de passerelle descendant reçu, de façon à ce que ces émissions et/ou réceptions radiofréquences soient synchronisées en phase et/ou en fréquence en fonction du signal de synchronisation réseau.

Ainsi, plutôt que d'intégrer aux dispositifs d'émission/réception radiofréquences des systèmes de passerelle des moyens pour générer des signaux plus précis et plus stables en fréquences, on importe un signal de synchronisation précis, issu par exemple d'une horloge atomique du réseau de télécommunications, et le dispositif d'émission/réception radiofréquences du système de passerelle émet et/ou reçoit des signaux radiofréquences relativement précis en fréquence car élaborés à partir de ce signal de synchronisation réseau.

On peut ainsi fiabiliser les communications radiofréquences, même avec un nombre d'équipements émetteurs relativement élevé, et ce de façon relativement simple et bon marché.

Du fait de cette précision en fréquence, l'invention peut ainsi permettre la génération de signaux radiofréquences avec des modulations plus élaborées que dans l'art antérieur.

En outre, l'invention peut permettre de limiter les modifications à apporter aux équipements déjà mis en place dans des installations existantes.

Avantageusement et de façon non limitative, le dispositif d'émission/réception radiofréquences peut émettre vers le dispositif de comptage un signal radiofréquences descendant conformé pour que les émissions et/ou réceptions radiofréquences du module radiofréquences du dispositif de comptage puissent être adaptées à partir de ce signal radiofréquences descendant de façon à être synchronisées en phase et/ou en fréquence en fonction du signal de synchronisation réseau.

Par exemple, le signal radiofréquences descendant peut être généré de sorte qu'à partir de ce signal radiofréquences descendant puisse être extrait un signal de synchronisation.

Alternativement ou en complément, le signal radiofréquences descendant peut être généré de façon à transporter des données de synchronisation. Par exemple, ce signal peut être structuré en trames comprenant des champs de données, et les données de synchronisation peuvent occuper tout ou partie d'un champ de données. Les données de synchronisation peuvent comprendre des ordres d'adaptation des émissions et/ou réceptions radiofréquences du module radiofréquences, par exemple un ordre de décalage de phase, et/ou de fréquence, et éventuellement un ordre de décalage d'horloge, afin que le module radiofréquences reçoive l'ordre d'adapter ses communications en imposant tel ou tel décalage.

Ainsi, plutôt que d'intégrer des éléments complexes et éventuellement coûteux énergétiquement parlant, comme par exemple un système de compensation en température pour oscillateur, le module radiofréquences utilise une information d'horloge externe pour garantir une relative précision quant aux fréquences des ondes radiofréquences émises, et/ou quant aux filtres appliqués à la réception.

Ceci peut être particulièrement avantageux, dans la mesure où les modules radiofréquences des dispositifs de comptage sont généralement alimentés par des piles électriques, et sont destinés à fonctionner pendant une période de temps de l'ordre de 15 à 20 ans.

Ces modules radiofréquences peuvent être agencés pour :
- rester en veille la plupart du temps, pour
- sortir régulièrement, par exemple quotidiennement ou une fois par semaine, de cet état de veille afin de transmettre des données, par exemple un volume de fluide consommé, et pour
- rester dans un état de fonctionnement pendant un laps de temps prédéterminé suite à cette transmission, avant de retourner à l'état de veille à des fins d'économie d'énergie.

C'est pendant cette courte fenêtre temporelle, de par exemple quelques centaines de millisecondes, que le module radiofréquences pourra recevoir le signal radiofréquences descendant issu du dispositif d'émission/réception radiofréquences et synchroniser ses propres émissions et/ou réceptions en conséquence, par exemple en imposant un décalage en fréquence à un signal d'horloge généré en interne.

Le signal radiofréquences descendant peut ainsi être transmis vers un dispositif de comptage, par exemple en diffusant ce signal courte portée, suite à la réception de données issues de ce dispositif de comptage.

Il est en outre proposé un procédé de gestion mis en œuvre par un dispositif concentrateur d'un système de passerelle d'une installation de télérelève, ledit système de passerelle comprenant en outre un dispositif d'émission/réception radiofréquences en communication avec le dispositif concentrateur, l'installation de télérelève comprenant en outre une pluralité de dispositifs de comptage, chaque dispositif de comptage comprenant un module de comptage et un module radiofréquences pour communiquer avec au moins un dispositif d'émission/réception radiofréquences, le procédé comprenant
- recevoir d'un réseau de télécommunications un signal de synchronisation réseau issu d'une horloge de ce réseau,
- élaborer à partir du signal de synchronisation réseau un signal de passerelle descendant,
- transmettre ce signal de passerelle descendant vers le dispositif d'émission/réception radiofréquences.

Le signal de passerelle descendant est élaboré de sorte que les émissions et/ou réceptions radiofréquences du dispositif d'émission/réception radiofréquences puissent être adaptées à partir de ce signal de passerelle descendant de façon à être synchronisées en phase et/ou en fréquence en fonction du signal de synchronisation réseau.

En particulier, on pourra prévoir que le signal de passerelle descendant soit issu une boucle à verrouillage de phase ou PLL (de l'anglais « Phase Locked Loop ») du dispositif concentrateur, recevant en entrée le signal de synchronisation réseau, de sorte que la phase et/ou la fréquence du signal en sortie du PLL soit asservie à ce signal de synchronisation.

La PLL pourra avantageusement recevoir en outre en entrée un signal issu d'un premier oscillateur du dispositif concentrateur.

Avantageusement et de façon non limitative, on pourra prévoir que le signal de passerelle descendant soit élaboré en utilisant comme horloge de référence le signal asservi en sortie du PLL. Ainsi, le signal de passerelle descendant est en outre élaboré à partir de données à transmettre. Le dispositif émetteur/récepteur reçoit un signal précis en fréquence, et à partir duquel pourront être extraites à la fois des données et un signal de synchronisation. Ce signal de synchronisation pourra être utilisé pour les émissions et/ou réception radiofréquences du dispositif émetteur/récepteur.

Avantageusement et de façon non limitative, le signal de passerelle descendant peut être conforme au protocole mis en œuvre entre le dispositif concentrateur et le dispositif d'émission/réception radiofréquences, par exemple Ethernet. Le procédé décrit ci-dessus peut ainsi être mis en place dans une installation existante relativement facilement, dans la mesure où aucun câble supplémentaire n'est à ajouter.

Alternativement, on pourrait prévoir que le signal de passerelle descendant soit un signal d'horloge.

Alternativement, on pourrait prévoir que le signal de passerelle descendant, par exemple conforme au protocole Ethernet, soit élaboré de façon à transmettre des données de synchronisation, par exemple des ordres d'adaptation des émissions et/ou réceptions radiofréquences du dispositif d'émission/réception radiofréquence, par exemple un ordre de décalage de phase.

Ces données de synchronisation peuvent avantageusement être générées à partir du signal de synchronisation réseau, et à partir en outre d'un signal émis par le dispositif d'émission/réception radiofréquences. La génération des données de synchronisation peut être effectuée par le dispositif concentrateur, ou bien encore par un autre équipement distant en communication avec le dispositif concentrateur.

Avantageusement et de façon non limitative, le dispositif d'émission/réception radiofréquences peut être conformé de façon à générer au moins un signal de synchronisation à partir du signal de passerelle descendant, le signal radiofréquences descendant étant élaboré à partir de ce signal de synchronisation.

Le dispositif d'émission/réception radiofréquences pourra ainsi comprendre une ou plusieurs PLL(s), pour extraire du signal de passerelle descendant un signal de synchronisation.

Le dispositif d'émission/réception radiofréquences pourra en outre comprendre un ou plusieurs oscillateurs locaux fournissant des signaux à ces une ou plusieurs PLL respectives.

Le signal de synchronisation ainsi généré par le dispositif d'émission/réception radiofréquences pourra servir de signal d'horloge lors de l'élaboration du signal radiofréquences descendant. Ce signal radiofréquences descendant peut ainsi servir à la transmission de données.

Dans un mode de réalisation, les données du signal radiofréquences descendant peuvent comprendre des données de synchronisation comprenant des ordres d'adaptation. Ces ordres d'adaptation peuvent par exemple comprendre des données de recalage en phase et/ou en fréquence, et éventuellement en temps, destinées à un module radiofréquences.

Dit autrement, le dispositif de comptage est susceptible de recevoir du système de passerelle des ordres de recalage, afin que les signaux émis par le dispositif de comptage soient suffisamment précis en phase et en fréquence.

Avantageusement et de façon non limitative, ces données de synchronisation peuvent être générées par un équipement externe, en communication avec l'installation de télérelève via un réseau de télécommunications. Ainsi, le système de passerelle peut-il conserver une structure relativement simple et peu exigeante en termes de ressources.

On pourrait alternativement prévoir que des données de recalage des ordres de recalage soient élaborées à partir du dispositif concentrateur, ou bien encore à partir du dispositif d'émission/réception radiofréquences.

Ces données de synchronisation peuvent être générées à partir de signaux radiofréquences issus du dispositif de comptage et à partir du signal de synchronisation réseau.

Dans un autre mode de réalisation, ou en complément, le module radiofréquences peut être agencé de façon à extraire à partir du signal radiofréquences descendant un signal de synchronisation et utiliser ce signal de synchronisation comme signal d'horloge lors de l'émission de signaux radiofréquences montants destinés au système de passerelle, notamment de signaux transportant des données de comptage, par exemple une valeur de volume de fluide ou bien encore une valeur mesurée de température.

Avantageusement et de façon non limitative, l'horloge du réseau de communication peut comprendre une horloge atomique.

Avantageusement et de façon non limitative, cette horloge peut être embarquée dans un satellite, par exemple un satellite d'un système de positionnement et de datation par satellite ou GNSS (de l'anglais « Global Navigation Satellite System »), par exemple un satellite GPS (de l'anglais « Global Positioning System »).

Le dispositif concentrateur peut ainsi être en communication avec un réseau comprenant un satellite GPS et avec un réseau comprenant des équipements d'une société de distribution de fluide ou d'énergie par exemple. En cas de génération de données de recalage, à intégrer dans le signal radiofréquences descendant et/ou le signal de passerelle descendant, l'équipement générant ces données peut appartenir au réseau de cette société.

Sont en outre proposé des produits programme d'ordinateur comprenant des instructions pour effectuer les étapes des procédés respectifs décrits ci-dessus lorsque ces instructions sont exécutées par des processeurs respectifs. Ces programmes d'ordinateur peuvent par exemple être stockés sur un support mémoire du type disque dur ou autre, ou bien encore être téléchargés, etc.

Il est en outre proposé un dispositif concentrateur pour un système de passerelle d'une installation de télérelève, ce système de passerelle comprenant en outre un dispositif d'émission/réception radiofréquences en communication avec le dispositif concentrateur, l'installation de télérelève comprenant en outre une pluralité de dispositifs de comptage, chaque dispositif de comptage comprenant un module de comptage et un module radiofréquences pour communiquer avec au moins un dispositif d'émission/réception radiofréquences, le dispositif concentrateur comprenant :
- des moyens de réception pour recevoir d'un réseau de télécommunications un signal de synchronisation réseau issu d'une horloge de ce réseau,
- des moyens de traitement pour élaborer à partir du signal de synchronisation réseau un signal de passerelle descendant, et
- des moyens de transmission pour transmettre vers le dispositif d'émission/réception radiofréquences le signal de passerelle descendant.

Les moyens de traitement sont agencés pour que le signal de passerelle descendant soit élaboré de sorte que les émissions et/ou réceptions radiofréquences du dispositif d'émission/réception radiofréquences puissent être adaptées à partir de ce signal de passerelle descendant de façon à être synchronisées en phase et/ou en fréquence en fonction du signal de synchronisation réseau.

Il est en outre proposé un dispositif d'émission/réception radiofréquences pour un système de passerelle d'une installation de télérelève comprenant en outre une pluralité de dispositifs de comptage, chaque dispositif de comptage comprenant un module de comptage et un module radiofréquences pour communiquer avec ce dispositif d'émission/réception radiofréquences, et ce système de passerelle comprenant en outre un dispositif concentrateur en communication d'une part avec ce dispositif d'émission/réception radiofréquences, et d'autre part avec au moins un réseau de télécommunications externe, le dispositif d'émission/réception radiofréquences comprenant :
- des moyens de réception pour recevoir du dispositif concentrateur un signal de passerelle descendant, élaboré à partir d'un signal de synchronisation réseau issu d'une horloge du réseau de télécommunications, et
- des moyens de traitement pour adapter les émissions radiofréquences vers le dispositif de comptage et/ou les réceptions radiofréquences en provenance du dispositif de comptage, à partir de ce signal de passerelle descendant reçu, de façon à ce que ces émissions et/ou réceptions radiofréquences soient synchronisées en phase et/ou en fréquence en fonction du signal de synchronisation réseau.

Les différents moyens de réception décrits ci-dessus peuvent par exemple comprendre une broche d'entrée, un port d'entrée ou autre. Dans le cas du dispositif d'émission/réception radiofréquence, et éventuellement du dispositif concentrateur, les moyens de réception peuvent par exemple comprendre un port Ethernet, ou autre.

Les différents moyens de traitement décrits ci-dessus peuvent par exemple comprendre un cœur de processeur, une PLL, et/ou autre.

Les moyens de transmission du dispositif concentrateur peuvent par exemple comprendre une broche de sortie, un port de sortie, par exemple un port Ethernet, et/ou autre.

Le dispositif d'émission/réception radiofréquences peut comprendre en outre des moyens de transmission pour transmettre les signaux radiofréquences descendants vers les dispositifs de comptage, par exemple une broche de sortie, une antenne, et/ou autre.

Le dispositif d'émission/réception radiofréquences peut comprendre un processeur, par exemple un DSP (de l'anglais « Digital Signal Processing »), un microcontrôleur, un micro processeur et/ou autre.

Le dispositif concentrateur peut par exemple comprendre un processeur, par exemple, un DSP, un microcontrôleur, un microprocesseur et/ou autre.

Il est en outre proposé un système de passerelle pour une installation de télérelève comprenant en outre une pluralité de dispositifs de comptage, chaque dispositif de comptage comprenant un module de comptage et un module radiofréquences, ce système de passerelle comprenant un dispositif d'émission/réception radiofréquences tel que décrit ci-dessus et/ou un dispositif concentrateur tel que décrit ci-dessus.

Avantageusement, chaque module de comptage peut comprendre un module de comptage d'eau, c'est-à-dire que l'installation peut être une installation de télérelève de compteurs d'eau.

L'invention peut trouver une application particulière dans la télérelève de compteur d'eau, mais elle n'est pas limitée à cet exemple d'application. On pourra par exemple prévoir de mettre en œuvre l'invention avec des compteurs d'électricité, des compteurs de gaz, ou autre. Plus généralement, les modules de comptage du dispositif de comptage peuvent être agencés pour mesurer une consommation de fluide, d'énergie ou autre, ou bien encore pour mesurer une valeur de paramètre. Les modules de comptage peuvent par exemple comprendre des capteurs, par exemple des capteurs de température, de pression, de niveau ou autre. L'invention pourra ainsi trouver une application dans le domaine de la télésurveillance.

### Description de la figure:

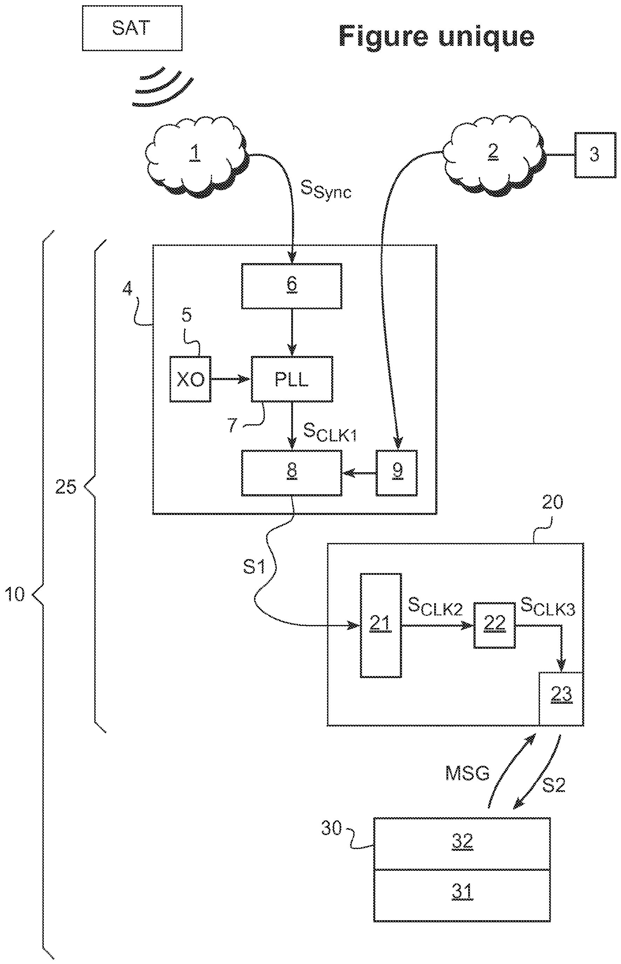

L'installation sera mieux comprise en référence à la figure unique, ou figure 1, laquelle illustre un mode de réalisation donné à titre d'exemple et non limitatif.

Cette figure 1 montre schématiquement un exemple d'installation de télérelève selon un mode de réalisation de l'invention.

### Description détaillée:

Une installation de télérelève 10 comprend un parc de dispositifs de comptage, ou compteurs 30. Chaque compteur 30 comprend un module de comptage 31 agencé pour mesurer par exemple un volume d'eau et un module radiofréquences 32 comprenant notamment une antenne non représentée, pour communiquer avec un dispositif d'émission/réception radiofréquences 20 d'un système de passerelle 25.

Classiquement, on installe un ou plusieurs compteurs 30 par logement. Le module radiofréquences 32 émet des ondes dans une bande libre autour de 169 MHz.

On prévoit en outre des systèmes de passerelle 25, par exemple un système de passerelle 25 par immeuble, ou par groupe d'habitations.

Il est souhaitable que chaque système 25 communique avec un ensemble de compteurs 30. Chaque système 25 peut ainsi comprendre un dispositif concentrateur 4, et un ou plusieurs dispositifs d'émission/réception radiofréquences 20. Par exemple, on installe un dispositif concentrateur 4 dans une armoire de collecte dans un hall d'entrée d'immeuble, et trois ou quatre dispositifs d'émission/réception radiofréquences sur le toit de l'immeuble ou sur les murs, de façon à s'assurer de la réception de toutes les trames émises par les différents compteurs 30 de l'immeuble.

On pourra ainsi relever que l'accès au dispositif concentrateur 4 est plus aisé que l'accès au dispositif d'émission/réception radiofréquences 20.

Les compteurs 30 intègrent une seule pile, par exemple une pile lithium ou autre, et il est souhaitable que ces compteurs 30 aient une durée de vie de l'ordre d'une quinzaine d'années, voire d'une vingtaine d'années. Ces compteurs 30 sont donc agencés de façon à limiter la consommation d'énergie électrique. Ces compteurs 30 comprennent des oscillateurs à quartz non représentés et relativement peu onéreux.

Egalement, le dispositif d'émission/réception radiofréquences 20 intègre un oscillateur à quartz non représenté.

Dans l'art antérieur, les signaux issus de ces différents oscillateurs à quartz sont utilisés comme signaux d'horloge pour les communications entre les compteurs 30 et les dispositifs d'émission/réception radiofréquences 20.

L'installation 10 est agencée de façon à importer une information de synchronisation depuis un réseau de télécommunication 1, par exemple, un réseau comprenant ou en en communication avec un satellite SAT de type satellite GPS intégrant une horloge atomique non représentée.

Un récepteur réseau 6, par exemple un récepteur GPS ou autre, du dispositif concentrateur 4 reçoit ainsi un signal de synchronisation réseau S_{sync} issu de l'horloge atomique.

Une boucle à verrouillage de phase 7 reçoit en entrée un signal issu d'un oscillateur de précision 5, par exemple un oscillateur VCXO (de l'anglais « Voltage Controlled Oscillator »). Le signal de synchronisation réseau S_{sync} peut être un signal 1PPS (de l'anglais « Pulse Per Second »), ou un multiple. Ce signal est ainsi utilisé comme référence pour la PLL 7, cette PLL générant un signal de synchronisation S_{CLK1} de par exemple 25 MHz.

Dit autrement, le dispositif concentrateur 4 intègre un oscillateur du type GPSDO (de l'anglais « GPS Disciplined Oscillator »).

Ce signal S_{CLK1} est à son tour utilisé comme horloge de référence physique d'un commutateur (en anglais « Switch Ethernet ») 8. Ce commutateur 8 génère ainsi un signal de passerelle descendant S1, conforme au protocole Ethernet, à partir d'une sortie de moyens de traitement 9 transmettant au commutateur 8 des données à transmettre.

Ces moyens de traitement 9 sont par ailleurs en communication avec un deuxième réseau de télécommunications 2, dans cet exemple distinct du premier réseau de télécommunication 1. Ce deuxième réseau de télécommunication 2 est en communication avec un serveur central 3 géré par exemple par une société de distribution d'eau. Ainsi, les trames Ethernet S1 générées par le commutateur 8 pourront intégrer des données issues de ce serveur central 3. Ces trames Ethernet S1 seront relativement précises en phase et en fréquence, du fait de l'asservissement au signal de synchronisation réseau S_{sync} issu de l'horloge atomique.

On pourra prévoir d'utiliser la liaison Ethernet entre le dispositif concentrateur 4 et les dispositifs d'émission/réception radiofréquences 20, en mode Fast Ethernet (100 BT) ou Gigabit Ethernet (1000 BT). Dans ces modes, la fréquence de rythme Ethernet est transmise en permanence par le commutateur 8 sur les différentes liaisons et peut donc être exploitée par les équipements 20 raccordés au dispositif concentrateur 4, ou unité centrale.

Ainsi, le dispositif concentrateur 4 génère-t-il des trames Ethernet transportant des données issues du serveur central 3, et ce, de sorte qu'à partir de ces trames, puisse être extrait un signal de synchronisation, de fait fonction du signal de synchronisation réseau S_{sync}.

On utilise des liaisons Ethernet point à point entre l'unité centrale 4 et les dispositifs d'émission/réception radiofréquences 20 pour la communication de données et pour la synchronisation des radiocommunications entre les équipements 20 et 30.

Les équipements 20 sont en effet agencés pour synchroniser leur(s) fréquence(s) d'émission/réception en utilisant la porteuse de niveau physique de la liaison Ethernet. On récupère l'horloge de niveau physique de la liaison Ethernet au niveau d'un composant d'interface physique Ethernet 21, par exemple un composant d'interphase PHY Ethernet utilisé pour la gestion du lien Ethernet vers l'unité centrale 4.

Le signal d'horloge S_{CLK2} ainsi obtenu est utilisé pour piloter une boucle à verrouillage de phase 22, permettant ainsi de générer un signal de synchronisation S_{CLK3} de relativement haute stabilité, ce signal S_{CLK3} pilotant à son tour un émetteur et/ou récepteur radiofréquences 23.

Dans le mode de réalisation représenté, l'émetteur et le récepteur radiofréquences sont physiquement conjoints, mais on pourrait prévoir un émetteur radiofréquences et un récepteur radiofréquences séparés.

Plus précisément, le dispositif d'émission/réception radiofréquences 20 comporte de fait deux boucles à verrouillage de phase, dont une seule est représentée sur la figure 1. Le composant d'interface PHY Ethernet 21 intègre en effet une boucle à verrouillage de phase de récupération de l'horloge de niveau physique 25 MHz utilisé pour le pilotage de réception Ethernet.

La sortie de cette boucle de verrouillage de phase interne à l'interface PHY Ethernet 21 est récupérée, par exemple via une interface de type MII (de l'anglais « Media Independent Interface ») non représentée, et sert à son tour de référence à une boucle de verrouillage de phase à très bas bruit de phase 22, par exemple architecturée autour d'un oscillateur non représenté, par exemple un oscillateur VCT (de l'anglais « Voltage Controlled Temperature Compensated Stale Oscillator »).

Le signal S_{CLK3} a ainsi une fréquence verrouillée de proche en proche sur le signal GPS S_{sync} et ce, tout en ayant un bruit de phase relativement faible.

Ce signal S_{CLK3} est ensuite utilisé comme signal d'horloge pour les oscillateurs locaux, synthétisés ou non, des blocs d'émission et de réception radiofréquences à destination des compteurs 30.

Comme expliqué ci-dessus, les compteurs 30 sont conçus pour fonctionner tout en consommant relativement peu d'énergie. De fait, les compteurs 30 sont généralement plongés dans un état de veille. Ces compteurs sortent périodiquement de cet état de veille pour diffuser des signaux sous forme de trames MSG comprenant des données de comptage, par exemple une valeur de volume d'eau consommée. La périodicité des ces émissions peut être journalière, hebdomadaire ou autre.

Lorsqu'un dispositif d'émission/réception radiofréquences 20 reçoit un tel signal MSG issu d'un compteur 30, ce dispositif 20 relaie les informations contenues dans ce signal, par exemple en encapsulant les trames reçues dans des trames Ethernet non représentées, et en envoyant ces trames sur la liaison Ethernet vers le dispositif concentrateur 4. Le concentrateur 4 transmet à son tour ces informations de comptage vers le serveur distant 3.

Les dispositifs 20, 4 sont conçus pour limiter les traitements effectués suite à la réception de trames MSG issues des compteurs 30. En particulier, les dispositifs 20, 4 s'abstiennent de tout tri en fonction de l'adresse compteur d'origine.

Une fois la ou les trames de comptage MSG émises, le compteur 30 se place dans un état d'attente de message pendant une fenêtre temporelle de durée prédéterminée et relativement courte.

Il est possible au système de passerelle 25 d'envoyer des données vers le compteur 30 pendant ces fenêtres temporelles. Une fois la fenêtre temporelle écoulée, le compteur 30 retourne dans un état de veille, ce qui permet d'économiser de l'énergie.

Ainsi, lorsqu'une trame de donnée de comptage MSG a été reçue par le système de passerelle 25, les données de cette trame sont transmises vers le serveur distant 3, par exemple en effectuant des encapsulations de trames.

Le serveur distant 3 effectue un traitement à partir des données de cette trame.

En particulier, le serveur distant 3 peut calculer un montant à facturer à partir des données de comptage reçues dans la trame, procéder à une détection de défaillance de type fuite d'eau ou autre, et/ou autre.

En outre, le dispositif 3 peut générer un message destiné au compteur 30 ayant émis cette trame de données. Ce message est envoyé vers le système de passerelle 25, et ce système de passerelle 25 diffuse (« Broadcast » en anglais) un message intégrant des données d'adresse pour identifier le compteur 30 ayant émis cette trame de données de comptage, et des données destinées à ce compteur 30.

Dans le cadre de l'invention, les données ainsi générées par le dispositif serveur 3 sont reçues par les moyens de traitement 9, et le commutateur 8 génère le signal de passerelle descendant S1 de façon à intégrer ces données dans une trame Ethernet élaborée à partir d'un signal d'horloge S_{CLK1} lui-même issu d'une horloge atomique.

Chaque dispositif d'émission/réception radiofréquences 20 recevant ce signal S1 génère un signal radiofréquences descendant S2 intégrant les données issues du système serveur distant 3, ce signal S2 étant synchronisé à partir d'un signal d'horloge S_{CLK3} lui-même obtenu à partir du signal de passerelle descendant S1.

Ainsi, les dispositifs 20 diffusent-ils une trame synchronisée en fonction du signal de synchronisation réseau S_{SYNC} et ce, pendant la fenêtre temporelle d'écoute du compteur 30 ayant émis cette trame de donnée de comptage.

Chaque compteur situé à proximité des dispositifs d'émission/réception radiofréquences 20 est susceptible de recevoir ces trames S2. Toutefois on peut s'attendre à ce que la plupart des compteurs soient dans un état de veille, et que seul le compteur 30 ayant effectivement émis une trame de donnée de comptage MSG reçoive ces signaux S2.

Le compteur 30 peut néanmoins vérifier que l'adresse de destination de la trame S2 reçue concorde bien avec son propre identifiant de compteur.

Dans un mode de réalisation, et notamment lorsque les dispositifs 20 émettent des deuxièmes signaux S2 relativement fréquemment, on peut prévoir que le module 32 du compteur 30 extraie également un signal de synchronisation à partir du signal radiofréquences descendant S2 et utilise ce signal de synchronisation comme signal d'horloge pour la diffusion ultérieure de données de comptage. Ce signal de synchronisation peut en outre être utilisé à la réception de trames radiofréquences issues d'équipements 20.

Ainsi, le compteur 30 peut de manière automatique recalibrer sa fréquence d'émission et sa fréquence de réception en ce basant sur la fréquence des messages reçus. Le module radiofréquences 32 peut ainsi intégrer une ou plusieurs PLL non représentées pour extraire un signal de synchronisation de la trame S2, ce signal de synchronisation servant comme signal d'horloge lors de la prochaine émission et/ou réception radiofréquences.

Dans un autre mode de réalisation, le dispositif concentrateur 4 peut mesurer de façon relativement précise la fréquence d'émission du compteur 30 et corriger éventuellement cette fréquence d'émission en intégrant des données de recalage dans une trame Ethernet, de sorte que le dispositif d'émission/réception radiofréquences 20 génère un message de commande destiné à ce compteur. Le compteur 30 recevant un tel message de commande, toujours pendant sa fenêtre temporelle de réception, corrige alors sa fréquence d'émission et de réception radiofréquences.

Alternativement, on pourrait prévoir que ce soit le serveur distant 3 qui génère ces données de recalage. Ainsi, le système de passerelle 25 peut, suite à la réception de messages de données de comptage issues de compteurs 30, procéder à une analyse de la fréquence réelle à la réception. Puis le dispositif concentrateur 4 peut envoyer un message vers le serveur distant 3, ce message comprenant une information quant à la fréquence réelle utilisée par le compteur 30 en question. Le serveur central 3 procède alors à une analyse de la dérive, et décide d'une correction éventuelle. Dans ce dernier cas, le compteur central 3 émet un message de requête de recalage. Cet ordre de correction est transmis au compteur 30 via le dispositif concentrateur 4 et le dispositif d'émission/réception radiofréquences 20, toujours pendant la fenêtre d'écoute faisant suite à l'émission d'une trame de données de comptage du compteur 30. Le compteur 30 recevant cette trame avec un ordre d'adaptation modifie alors sa fréquence d'émission et sa fréquence de réception.

Les compteurs 30 et les dispositifs d'émission/réception radiofréquences 20 peuvent former un réseau de courte portée ou LAN (de l'anglais « Local Area Network »).

La liaison entre le dispositif concentrateur 4 et les dispositifs d'émission/réception radiofréquences 20 est une liaison Ethernet.

Le réseau de télécommunication 2 entre le serveur distant 3 et le système de passerelle 25 peut être un réseau WAN (de l'anglais « Wide Area Network »), par exemple un réseau filaire, un réseau GPRS (de l'anglais « General Packet Radio Service ») ou autre.

## Revendications

1. Système de passerelle (25) d'une installation de télérelève (10) comprenant une pluralité de dispositifs de comptage (30) comprenant chacun un module de comptage (31) et un module radiofréquences (32) courte portée ; le système de passerelle (25) comprenant :
- un dispositif d'émission/réception radiofréquences (20) courte portée ; chaque module radiofréquences (32) de chaque dispositif de comptage (30) étant adapté pour communiquer avec ce dispositif d'émission/réception radiofréquences (20), et
- un dispositif concentrateur (4) en communication d'une part avec ledit dispositif d'émission/réception radiofréquences (20), et d'autre part avec au moins un réseau de télécommunications externe (1, SAT) ;
le dispositif d'émission/réception radiofréquences (20) comprenant :
- des moyens de réception (21) pour recevoir du dispositif concentrateur un signal de passerelle descendant (S1), élaboré à partir d'un signal de synchronisation réseau (S_{sync}) issu d'une horloge du réseau de télécommunications, et
- des moyens de traitement (21, 22, 23) pour adapter les émissions radiofréquences vers le dispositif de comptage et/ou les réceptions radiofréquences en provenance du dispositif de comptage, à partir de ce signal de passerelle descendant (S1) reçu, de façon à ce que ces émissions et/ou réceptions radiofréquences soient synchronisées en phase et/ou en fréquence en fonction du signal de synchronisation réseau (S_{sync}) ;
les émissions radiofréquences étant adaptées pour émettre vers le dispositif de comptage (30), suite à la réception de données de comptage (MSG) issues du dispositif de comptage (30), un signal radiofréquences descendant (S2) pour synchroniser en phase et/ou en fréquence, en fonction du signal de synchronisation réseau (S_{sync}), les émissions et/ou réceptions radiofréquences du module radiofréquences (32) du dispositif de comptage ; et le dispositif concentrateur (4) comprenant :
- des moyens de réception pour recevoir dudit réseau de télécommunications (1, SAT) un signal de synchronisation réseau (S_{sync}) issu d'une horloge de ce réseau,
- des moyens de traitement (5, 6, 7, 8, 9) pour élaborer à partir du signal de synchronisation réseau le signal de passerelle descendant (S1), et
- des moyens de transmission pour transmettre vers le dispositif d'émission/réception radiofréquences le signal de passerelle descendant (S1),
les moyens de traitement (5, 6, 7, 8, 9) étant adaptés pour élaborer le signal de passerelle descendant (S1) de sorte que les émissions et/ou réceptions radiofréquences du dispositif d'émission/réception radiofréquences soient adaptées à partir de ce signal de passerelle descendant et synchronisées en phase et/ou en fréquence en fonction du signal de synchronisation réseau.

2. Installation de télérelève de compteurs d'eau comprenant une pluralité de dispositifs de comptage, chaque dispositif de comptage comprenant un module de comptage de consommation d'eau (31) et un module radiofréquences (32), et au moins un système de passerelle (25) selon la revendication 1.

3. Procédé mis en œuvre par un dispositif d'émission/réception radiofréquences (20) courte portée le dispositif faisant partie d'un système de passerelle (25) selon la revendication 1 et le procédé comprenant les étapes suivantes
recevoir du dispositif concentrateur un signal de passerelle descendant (S1), élaboré à partir d'un signal de synchronisation réseau (S_{sync}) issu d'une horloge du réseau de télécommunications externe,
adapter les émissions radiofréquences vers le dispositif de comptage et/ou les réceptions radiofréquences en provenance du dispositif de comptage, à partir de ce signal de passerelle descendant reçu, de façon à ce que ces émissions et/ou réceptions radiofréquences soient synchronisées en phase et/ou en fréquence en fonction du signal de synchronisation réseau ;
émettre vers le dispositif de comptage (30) un signal radiofréquences descendant (S2) conformé pour que les émissions et/ou réceptions radiofréquences du module radiofréquences (32) du dispositif de comptage puissent être adaptées à partir de ce signal radiofréquences descendant de façon à être synchronisées en phase et/ou en fréquence en fonction du signal de synchronisation réseau (S_{sync}) ; et
transmettre le signal radiofréquences descendant (S2) suite à la réception de données de comptage (MSG) issues du dispositif de comptage (30).

4. Procédé selon la revendication 3, comprenant
générer le signal radiofréquences descendant (S2) de sorte que ledit signal intègre des données de synchronisation comprenant au moins un ordre d'adaptation des émissions et/ou réceptions radiofréquences du module radiofréquences (32), ledit au moins un ordre comprenant des données de recalage en phase et/ou en fréquence.

5. Procédé selon la revendication 4, dans lequel les données de synchronisation sont générées par un équipement (3) en communication avec l'installation de télérelève (10) via un réseau de télécommunications (2).

6. Procédé selon l'une quelconque des revendications 4 ou 5, dans lequel les données de synchronisation sont générées à partir de signaux radiofréquences (MSG) issus du dispositif de comptage et à partir du signal de synchronisation réseau (S_{sync}).

## Patentansprüche

1. Gateway-System (25) einer Fernleseinstallation (10), eine Vielzahl von Zählvorrichtungen (30) umfassend, die jeweils ein Zählmodul (31) und ein Funkfrequenzmodul (32) mit kurzer Reichweite umfassen; wobei das Gateway-System (25) umfasst:
- eine Sende-/Empfangsvorrichtung für Funkfrequenzen (20) mit kurzer Reichweite; wobei jedes Funkfrequenzmodul (32) einer jeden Zählvorrichtungen (30) angepasst ist, um mit dieser Sende-/Empfangsvorrichtung für Funkfrequenzen (20) zu kommunizieren, und
- eine Konzentratorvorrichtung (4) in Kommunikation einerseits mit der Sende-/Empfangsvorrichtung für Funkfrequenzen (20) und andererseits mit mindestens einem externen Telekommunikationsnetz (1, SAT);
wobei die Sende-/Empfangsvorrichtung für Funkfrequenzen (20) umfasst:
- Empfangsmittel (21) zum Empfangen von der Konzentratorvorrichtung eines absteigenden Gateway-Signals (S1), das aus einem Netzsynchronisationssignal (S_{sync}), das aus einem Takt des Telekommunikationsnetzes stammt, ausgearbeitet wird, und
- Bearbeitungsmittel (21, 22, 23) zum Anpassen der Funkfrequenzsendungen zur Zählvorrichtung und/oder der Funkfrequenzempfänge von der Zählvorrichtung ausgehend von diesem empfangenen absteigenden Gateway-Signal (S1), sodass diese Funkfrequenzsendungen und/oder - empfänge in Abhängigkeit vom Netzsynchronisationssignal (S_{sync}) in Phase und/oder in Frequenz synchronisiert sind;
wobei die Funkfrequenzsendungen angepasst sind, um nach dem Empfang von aus der Zählvorrichtung (30) stammende Zähldaten (MSG) ein absteigendes Funkfrequenzsignal (S2) zur Zählvorrichtung (30) zu senden, um die Funkfrequenzsendungen und/oder -empfänge des Funkfrequenzmoduls (32) der Zählvorrichtung in Abhängigkeit vom Netzsynchronisationssignal (S_{sync}) in Phase und/oder in Frequenz zu synchronisieren; und die Konzentratorvorrichtung (4) umfasst:
- Empfangsmittel zum Empfangen von dem Telekommunikationsnetz (1, SAT) eines aus einem Takt dieses Netzes stammenden Netzsynchronisationssignals (S_{sync}),
- Bearbeitungsmittel (5, 6, 7, 8, 9) zum Ausarbeiten, ausgehend von dem Netzsynchronisationssignal, des absteigenden Gateway-Signals (S1), und
- Übertragungsmittel zum Übertragen zur Sende-/Empfangsvorrichtung für Funkfrequenzen des absteigenden Gateway-Signals (S1),
wobei die Bearbeitungsmittel (5, 6, 7, 8, 9) angepasst sind, um das absteigende Gateway-Signal (S1) auszuarbeiten, sodass die Funkfrequenzsendungen und/oder -empfänge der Sende-/Empfangsvorrichtung für Funkfrequenzen ausgehend von diesem absteigenden Gateway-Signal angepasst werden, und in Abhängigkeit von dem Netzsynchronisationssignal in Phase und/oder in Frequenz synchronisiert werden.

2. Fernleseinstallation von Wasserzählern, eine Vielzahl von Zählvorrichtungen umfassend, wobei jede Zählvorrichtung ein Wasserverbrauch-Zählmodul (31) und ein Funkfrequenzmodul (32) und mindestens ein Gateway-System (25) nach Anspruch 1 umfasst.

3. Verfahren zur Umsetzung durch eine Sende-/Empfangsvorrichtung für Funkfrequenzen (20) mit kurzer Reichweite, wobei die Vorrichtung zu einem Gateway-System (25) nach Anspruch 1 gehört, und das Verfahren die folgenden Schritte umfasst:
Empfangen von der Konzentratorvorrichtung eines absteigenden Gateway-Signals (S1), das aus einem Netzsynchronisationssignal (S_{sync}), das aus einem Takt des Telekommunikationsnetzes stammt, ausgearbeitet wird,
Anpassen der Funkfrequenzsendungen zur Zählvorrichtung und/oder der Funkfrequenzempfänge von der Zählvorrichtung, ausgehend von diesem empfangenen absteigenden Gateway-Signal, sodass diese Funkfrequenzsendungen und/oder -empfänge in Abhängigkeit vom Netzsynchronisationssignal in Phase und/oder in Frequenz synchronisiert werden;
Senden zur Zählvorrichtung (30) eines übereingestimmten absteigenden Funkfrequenzsignals (S2), damit die Funkfrequenzsendungen und/oder - empfänge des Funkfrequenzmoduls (32) der Zählvorrichtung aus diesem absteigenden Funkfrequenzsignal angepasst werden können, um in Abhängigkeit vom Netzsynchronisationssignal (S_{sync}) in Phase und/oder in Frequenz synchronisiert zu werden; und
Übertragen des absteigenden Funkfrequenzsignals (S2) nach dem Empfang von aus der Zählvorrichtung (30) stammenden Zähldaten (MSG).

4. Verfahren nach Anspruch 3, umfassend
Erzeugen des absteigenden Funkfrequenzsignals (S2), sodass das Signal Synchronisationsdaten eingliedert, die mindestens eine Anpassungsreihenfolge der Funkfrequenzsendungen und/oder -empfänge des Funkfrequenzmoduls (32) umfassen, wobei die mindestens eine Reihenfolge Neueinstellungsdaten in Phase und/oder in Frequenz umfasst.

5. Verfahren nach Anspruch 4, wobei die Synchronisationsdaten durch eine Ausrüstung (3) in Kommunikation mit der Fernleseinstallation (10) über ein Telekommunikationsnetz (2) erzeugt werden.

6. Verfahren nach einem der Ansprüche 4 oder 5, wobei die Synchronisationsdaten ausgehend von aus der Zählvorrichtung stammenden Funkfrequenzsignalen (MSG) und ausgehend von dem Netzsynchronisationssignal (S_{sync}) erzeugt werden.

## Claims

1. A gateway system (25) of a remote-reading apparatus (10) comprising a plurality of metering devices (30) each comprising a metering module (31) and a short-range radiofrequency module (32); the gateway system (25) comprising:
- a short-range radiofrequency emitter/receiver device (20); each radiofrequency module (32) of each metering device (30) being adapted to communicate with this radiofrequency emitter/receiver device (20), and
- a hub device (4) communicating, on the one hand, with said radiofrequency emitter/receiver device (20) and, on the other hand, with at least one external telecommunications network (1, SAT);
the radiofrequency emitter/receiver device (20) comprising:
- reception means (21) for receiving from the hub device a gateway downlink signal (S1), built from a network synchronisation signal (S_{sync}) originating from a clock of the telecommunications network, and
- processing means (21, 22, 23) for adapting the radiofrequency emissions to the metering device and/or the radiofrequency receptions coming from the metering device, from this received gateway downlink signal (S1), so that these radiofrequency emissions and/or receptions are phase- and/or frequency-synchronised according to the network synchronisation signal (S_{sync}) ;
the radiofrequency emissions being adapted to emit to the metering device (30), following the reception of metering data (MSG) originating from the metering device (30), a radiofrequency downlink signal (S2) to phase- and/or frequency-synchronise the radiofrequency emissions and/or receptions of the radiofrequency module (32) of the metering device according to the network synchronisation signal (S_{sync}) ;
and the hub device (4) comprising:
- reception means for receiving from said telecommunications network (1, SAT) a network synchronisation signal (S_{sync}) originating from a clock of this network,
- processing means (5, 6, 7, 8, 9) for building the gateway downlink signal (S1) from the network synchronisation signal, and
- transmission means for transmitting the gateway downlink signal (S1) to the radiofrequency emitter/receiver device,
the processing means (5, 6, 7, 8, 9) being adapted to build the gateway downlink signal (S1) so that the radiofrequency emissions and/or receptions of the radiofrequency emitter/receiver device are adapted from this gateway downlink signal and phase- and/or frequency-synchronised according to the network synchronisation signal.

2. An apparatus for remote-reading water meters comprising a plurality of metering devices, each metering device comprising a water consumption metering module (31) and a radiofrequency module (32), and at least one gateway system (25) according to claim 1.

3. A method implemented by a short-range radiofrequency emitter/receiver device (20), the device belonging to a gateway system (25) according to claim 1 and the method comprising the following steps:
receiving from the hub device a gateway downlink signal (S1), built from a network synchronisation signal (S_{sync}) originating from a clock of the external telecommunications network,
adapting the radiofrequency emissions to the metering device and/or the radiofrequency receptions coming from the metering device, from this received gateway downlink signal, so that the radiofrequency emissions and/or receptions are phase- and/or frequency-synchronised according to the network synchronisation signal;
emitting to the metering device (30) a radiofrequency downlink signal (S2) formed so that the radiofrequency emissions and/or receptions of the radiofrequency module (32) of the metering device could be adapted from this radiofrequency downlink signal so as to be phase- and/or frequency-synchronised according to the network synchronisation signal (S_{sync}); and
transmitting the radiofrequency downlink signal (S2) following the reception of metering data (MSG) originating from the metering device (30).

4. The method according to claim 3, comprising generating the radiofrequency downlink signal (S2) so that said signal embeds synchronisation data comprising at least one order for adapting the radiofrequency emissions and/or receptions of the radiofrequency module (32), said at least one order comprising phase- and/or frequency-reset data.

5. The method according to claim 4, wherein the synchronisation data are generated by a piece of equipment (3) communicating with the remote-reading apparatus (10) via a telecommunications network (2).

6. The method according to any one of claims 4 or 5, wherein the synchronisation data are generated from radiofrequency signals (MSG) originating from the metering device and from the network synchronisation signal (S_{sync}) .
